# EUROPEAN PATENT APPLICATION

(11) **EP 4 329 055 A2**
(43) Date of publication of application: **28.02.2024**
(21) Application number: 23191131.4
(22) Date of filing: 11.08.2023
(51) Int. Cl.: H01M 50/103, H01M 50/15, H01M 50/342, H01M 50/474, H01M 50/48

(54) **SECONDARY BATTERY**

(30) Priority: 26.08.2022 KR 20220107691
(71) Applicant: Samsung SDI Co., Ltd., Yongin-si, Gyeonggi-do 17084 (KR)
(72) Inventor: Lee, Hyun Soo, 17084 Yongin-si, Gyeonggi-do (KR)
(74) Representative: Gulde & Partner

(57) **Abstract**

A secondary battery includes: a case having a hexahedral shape with opposite ends in a longitudinal direction being open; an electrode assembly accommodated in the case and including a negative electrode tab at one end thereof in the longitudinal direction and a positive electrode tab at an opposite end thereof in the longitudinal direction; a pair of cap assemblies respectively electrically connected to the negative electrode tab and the positive electrode tab and respectively coupled to the open opposite ends of the case; and a retainer between the electrode assembly and the case and on a side surface area of the electrode assembly at where the negative electrode tab and the positive electrode tab are not formed.

## Description

### CROSS-REFERENCE TO RELATED APPLICATION

### BACKGROUND

### 1. Field

Aspects of embodiments of the present disclosure relate to a secondary battery.

### 2. Description of the Related Art

A secondary battery generally includes an electrode assembly having a positive electrode, a negative electrode, and a separator interposed between the positive electrode and the negative electrode, a case having one open side to receive (or to accommodate) the electrode assembly together with an electrolyte, and a cap assembly sealing the open side of the case. The cap assembly of the secondary battery generally includes a positive electrode terminal and a negative electrode terminal respectively electrically connected to positive and negative electrodes of the electrode assembly. The cap assembly may also include a vent (e.g., a degassing vent) configured to discharge gas when the internal pressure in the secondary battery increases above a reference level.

Recently, a secondary battery having cap assemblies disposed at both sides of a case have been developed. However, in secondary batteries having such a structure, it is difficult to secure a degassing passage for gas discharge because the cap assemblies are located on left and right sides of the case.

The above information disclosed in this Background section is for enhancement of understanding of the background of the present disclosure, and therefore, it may contain information that does not constitute prior art.

### SUMMARY

An object of the present invention is to provide a secondary battery having a degassing structure.

A secondary battery, according to the present invention, includes: a case having a hexahedral shape with opposite ends in a longitudinal direction being open; an electrode assembly accommodated in the case and including a negative electrode tab at one end thereof in the longitudinal direction and a positive electrode tab at an opposite end thereof in the longitudinal direction; a pair of cap assemblies respectively electrically connected to the negative electrode tab and the positive electrode tab and respectively coupled to the open opposite ends of the case; and a retainer between the electrode assembly and the case and on a side surface area of the electrode assembly at where the negative electrode tab and the positive electrode tab are not formed.

The case may have a vent in a long side surface thereof, and the retainer may be on a side surface of the electrode assembly corresponding to a position of the vent.

The retainer may have a degassing hole penetrating therethrough at a position corresponding to the vent.

The retainer may have a plurality of degassing holes penetrating therethrough at a position corresponding to the vent.

The retainer may have a plurality of degassing holes penetrating therethrough at an area covering and larger than an area corresponding to the position of the vent.

The secondary battery may further include a sub retainer on a side surface of the electrode assembly at where the vent is not formed.

The retainer and the sub-retainer may sheets and may be attached to the electrode assembly.

The retainer and sub-retainer may be made of insulating material.

The retainer and sub-retainer may have the same shape.

### BRIEF DESCRIPTION OF DRAWINGS

FIG. 1 is a perspective view of a secondary battery according to an embodiment of the present disclosure.
FIG. 2 is an exploded perspective view of the secondary battery shown in FIG. 1.
FIG. 3 is a partial perspective view illustrating a degassing structure and a gas discharge process in the secondary battery shown in FIG. 1.
FIG. 4 is a plan view of a degassing area of the secondary battery shown in FIG. 1.
FIGS. 5 to 7 are plan views of retainers according to various embodiments of the present disclosure.

### DETAILED DESCRIPTION

The present invention is set out in the appended set of claims, wherein the drawings and respective description relate to advantageous embodiments thereof.

Embodiments of the present disclosure are described herein to more completely aspects and features of the present disclosure to those skilled in the art, and the following embodiments may be modified in various other forms. In other words, the present disclosure may be embodied in many different forms and should not be construed as being limited to the embodiments set forth herein. Rather, these embodiments are provided so that this disclosure will be thorough and complete and will convey the aspects and features of the present disclosure to those skilled in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) referring to in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Hereinafter, a secondary battery according to embodiments of the present disclosure will be described, in detail, with reference to the accompanying drawings.

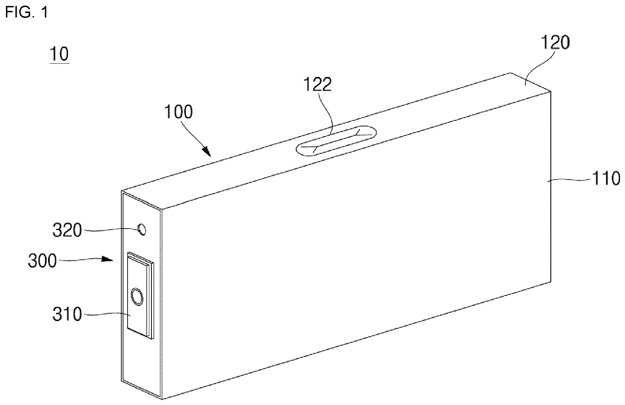

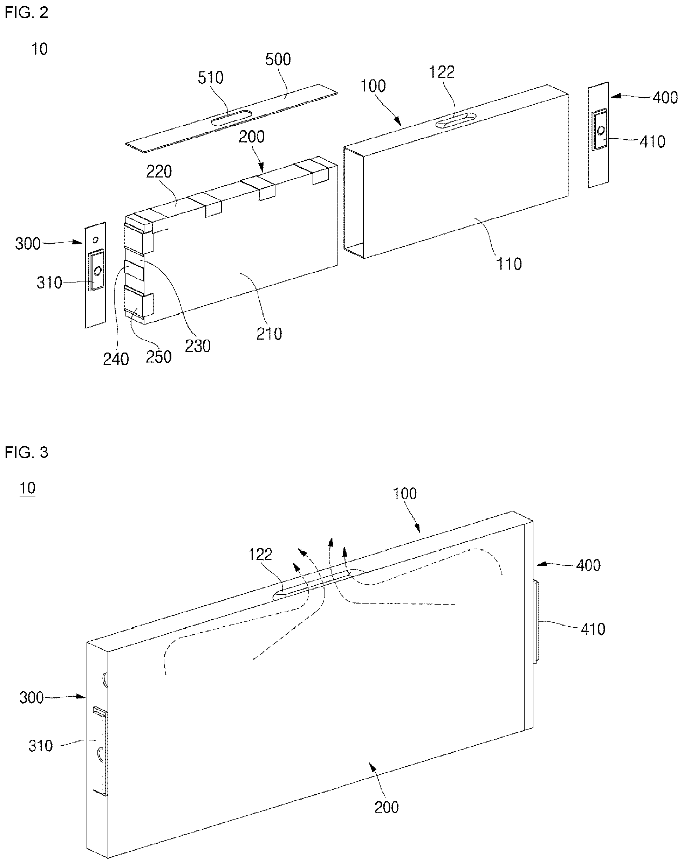

FIG. 1 is a perspective view of a secondary battery according to an embodiment of the present disclosure, and FIG. 2 is an exploded perspective view of the secondary battery shown in FIG. 1.

As shown in FIGS. 1 and 2, a secondary battery 10, according to an embodiment of the present disclosure, may include a prismatic case 100, an electrode assembly 200 accommodated in the case 100, and a pair of cap assemblies 300 and 400 coupled to the case 100. A retainer 500 may be inserted between the case 100 and the electrode assembly 200.

The case 100 may be formed of a conductive metal, such as aluminum, an aluminum alloy, or nickel-plated steel. As an example, as shown in FIGS. 1 and 2, the case 100 may have a hexahedral shape, such as a rectangular parallelepiped shape having a front surface 110 and a rear surface having the largest surfaces areas and an upper surface 120 and a lower surface that are long sides. The upper surface 120 and the lower surface may connect (or may extend between) the front surface 110 and the rear surface. Both ends of the case 100 in the longitudinal direction, which are short sides of the case 100, may be open. The pair of cap assemblies 300 and 400 are respectively coupled to the open ends of the case 100. A vent 122 may be formed in the upper surface 120 (e.g., in the long side surface).

The vent 122 may be formed in the upper surface 120 as shown in FIGS. 1 and 2. However, the vent 122 may be formed in the lower surface according to the direction in which the case 100 is installed. For example, when the lower surface is disposed to face upwardly. In other words, the vent 122 may be formed in either long side surface of the case 100.

According to one embodiment the case 100 has a vent 122 in a long side surface thereof, and the retainer 500 is on a side surface of the electrode assembly 200 corresponding to a position of the vent 122, wherein the retainer 500 may have a degassing hole 510 penetrating therethrough at a position corresponding to the vent 122. In a preferred embodiment the secondary battery comprises a sub-retainer on a side surface of the electrode assembly 200 at where the vent 122 is not formed. The retainer 500 and the sub-retainer may be sheets and may be attached to the electrode assembly 200. For example, the retainer 500 and sub-retainer are made of insulating material. The retainer 500 and sub-retainer may have the same shape.

The vent 122 is a structure for degassing (e.g., for emitting or exhausting gas from) the secondary battery 10 when the internal pressure in the secondary battery 10 increases (e.g., increase beyond a reference level). When the internal pressure increases, the vent 122 bursts or breaks so that gas inside the secondary battery 10 may be discharged to the outside.

As shown in FIG. 2, the electrode assembly 200 may be formed by stacking or winding thin plate-shaped or film-shaped negative plates, separators, and positive electrode plates. The thus-formed electrode assembly 200 may have a rectangular parallelepiped shape. The electrode assembly 200 may have a front surface 210 and a rear surface having the largest surface areas, an upper surface 220 and a lower surface that are long sides, and a left side 230 and a right side that are short sides. After forming the electrode assembly 200, a plurality of finishing tapes 250 may be attached to the outside thereof to maintain the shape of the electrode assembly 200.

A negative electrode plate may be formed by applying a negative electrode active material, such as graphite or carbon, to a negative electrode substrate formed of a metal foil, such as copper, a copper alloy, nickel, or a nickel alloy. A negative electrode uncoated portion, at where the negative electrode active material is not applied, may be formed in a region of the negative electrode substrate. A negative electrode tab 240 may be formed from or connected to the negative electrode uncoated portion. The negative electrode tab 240 may be formed to face the left side 230 at one end of the electrode assembly 200 in the longitudinal direction.

A positive electrode plate may be formed by applying a positive electrode active material, such as a transition metal oxide, to a positive electrode substrate formed of a metal foil, such as aluminum or an aluminum alloy. A positive electrode uncoated portion, at where the positive electrode active material is not applied, may be formed in a region of the positive electrode substrate. A positive electrode tab may be formed from or connected to the positive electrode uncoated portion. The positive electrode tab may be formed to face the right side at the other longitudinal end of the electrode assembly 200 (the positive electrode tab is not shown in the drawings due to viewing angles). Thus, the negative electrode tab 240 and the positive electrode tab are formed to face in opposite directions.

A separator is disposed between the negative electrode plate and the positive electrode plate to prevent a short circuit while enabling the movement of lithium ions. The separator may be made of polyethylene, polypropylene, a composite film of polyethylene and polypropylene, or the like but is not limited thereto.

As described above, because the negative electrode tab 240 and the positive electrode tab are formed at both ends of the electrode assembly 200 in the longitudinal direction, the size of the current collecting parts (or components) can be reduced compared to a structure in which a negative electrode tab and a positive electrode tab are disposed on one side (e.g., on the same side). Accordingly, space utilization efficiency inside the case 100 may be improved. The negative electrode tab 240 is electrically connected to a first cap assembly 300, and the positive electrode tab is electrically connected to a second cap assembly 400.

As shown in FIGS. 1 and 2, the first cap assembly 300 may include a negative electrode terminal 310 electrically connected to the negative electrode tab 240. The first cap assembly 300 may be coupled to one end of the case 100 in the longitudinal direction to seal the case 100. The second cap assembly 400 may include a positive electrode terminal 410 electrically connected to the positive electrode tab. The second cap assembly 400 may be coupled to the other longitudinal end of the case 100 facing the first cap assembly 300 to seal the case 100.

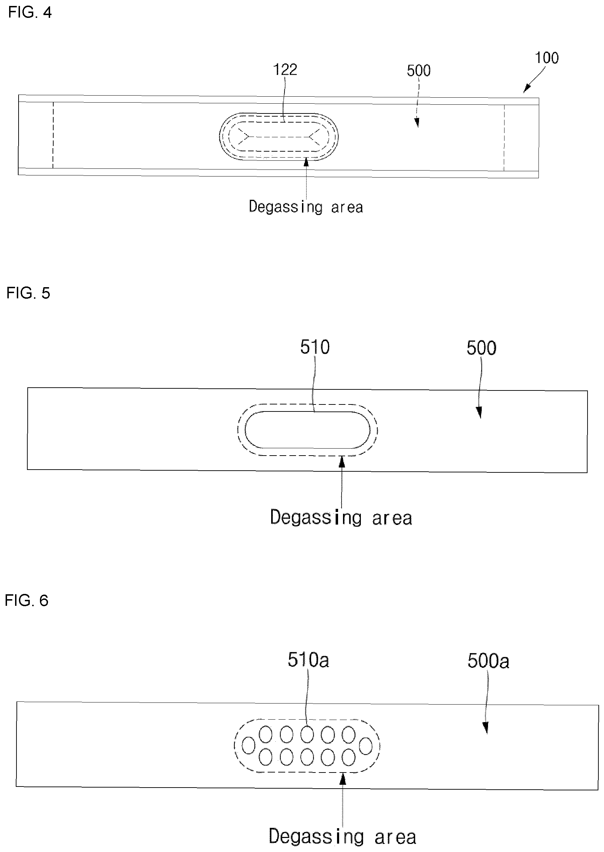

The retainer 500 may be provided in the secondary battery 10. The retainer 500 may prevent the electrode assembly 200 from moving inside the case 100. As shown in FIG. 2, the retainer 500 may be disposed between the upper surface 220 (e.g., the long side) of the electrode assembly 200 at where the negative electrode tab or the positive electrode tab is not formed and the upper surface 120 (e.g., the long side) of the case 100. The retainer 500 may include a pair of retainers that are disposed between the upper and lower surfaces of the electrode assembly 200 and the upper and lower surfaces of the case 100, respectively. In such an embodiment, the pair of retainers 500 may have the same shape. For convenience, a retainer on the bottom side of the electrode assembly 200 may be referred to as a sub-retainer. As an example, the retainer 500 may have a rectangle shape having a smaller size than the upper surface 120 of the case 100 (see, e.g., FIG. 4). In addition, as an example, the retainer 500 may be attached to the upper surface 220 of the electrode assembly 200.

The retainer 500 may be in the form of a sheet of an insulating material. The retainer 500 may include an adhesive layer provided only on a surface thereof attached to the electrode assembly 200, or the retainer 500 may include an adhesive layer provided on a surface thereof facing the case 100. To prevent a gas discharge area (shown as the degassing area in the drawings) from being closed by the retainer 500, a degassing hole (e.g., a degassing opening) 510 may be formed to penetrate the retainer 500 at a position corresponding to the vent 122. The gas discharge area is approximately (or schematically) shown as a through-hole area formed in the case 100 when the vent 122 is broken.

FIG. 3 is a partial perspective view illustrating a degassing structure and a gas discharge direction in the secondary battery shown in FIG. 1. FIG. 4 is a plan view illustrating a degassing area of the secondary battery shown in FIG. 1. FIGS. 5 to 7 are plan views illustrating retainers according to various embodiments of the present disclosure.

First, as shown in FIG. 3, when gas (e.g., excessive gas) is generated inside the secondary battery 10, the vent 122 breaks or bursts due to the increased gas pressure, and the gas moves to and is discharged through the upper surface 120 of the case 100. Because the vent 122 is the only place at where gas can be discharged from the case 100, the gas discharge direction faces toward the vent 122. A through hole (e.g., an opening) formed when the vent 122 breaks or bursts becomes a gas discharge area (see, e.g., FIG. 4). Various types (or shapes) of degassing holes (e.g., degassing openings) 510 may be formed in (e.g., may be formed to penetrate) the retainer 500 at an area corresponding to the gas discharge area.

As shown in FIG. 5, the retainer 500 may have a degassing hole 510 formed in a substantially oval shape. As an example, the degassing hole 510 may be formed to have a size equal to or smaller than that of the gas discharge area. Because the retainer 500 is attached to the electrode assembly 200 but has the degassing hole 510, the gas generated inside the electrode assembly 200 can be discharged to the outside of the gas discharge area through the degassing hole 510.

In another embodiment, as shown in FIG. 6, a retainer 500a may include a plurality of degassing holes 510a formed to penetrate the retainer 500a in a circular shape at an area corresponding to the gas discharge area. As an example, the entire area at where the plurality of degassing holes 510a are formed may be smaller than the gas discharge area.

According to another embodiment the case 100 has a vent 122 in a long side surface thereof, and the retainer 500a is on a side surface of the electrode assembly 200 corresponding to a position of the vent 122, wherein the retainer 500 may have a plurality of degassing holes 510a penetrating therethrough at a position corresponding to the vent 122. In a preferred embodiment the secondary battery comprises a sub-retainer on a side surface of the electrode assembly 200 at where the vent 122 is not formed. The retainer 500a and the sub-retainer may be sheets and may be attached to the electrode assembly 200. For example, the retainer 500a and sub-retainer are made of insulating material. The retainer 500a and sub-retainer may have the same shape.

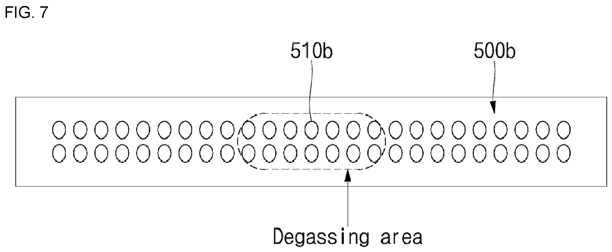

In another embodiment, as shown in FIG. 7, a retainer 500b may include a plurality of degassing holes 510b formed to penetrate the retainer 500b in a circular shape in a wider area than the gas discharge area. As an example, the entire area at where the plurality of degassing holes 510b are formed may be larger than the gas discharge area.

According to another embodiment the case 100 has a vent 122 in a long side surface thereof, and the retainer 500b is on a side surface of the electrode assembly 200 corresponding to a position of the vent 122, wherein the retainer 500b may have a plurality of degassing holes 510b penetrating therethrough at an area covering and larger than an area corresponding to the position of the vent 122. In a preferred embodiment the secondary battery comprises a sub-retainer on a side surface of the electrode assembly 200 at where the vent 122 is not formed. The retainer 500b and the sub-retainer may be sheets and may be attached to the electrode assembly 200. For example, the retainer 500b and sub-retainer are made of insulating material. The retainer 500b and sub-retainer may have the same shape.

As described above, because the degassing holes are formed to penetrate the retainer 500, the gas discharge area is not closed by the retainer 500. Thus, the gas can be smoothly discharged through the retainer 500.

As described above, according to embodiments of the present disclosure, a vent is formed in a side surface area of a case at where the cap assembly is not provided, and a retainer having a degassing hole (or opening) formed between the vent and the electrode assembly is provided. Thereby, a degassing structure is provided while maintaining insulation performance from the case.

While the foregoing embodiments are only some embodiments for carrying out the present disclosure, which is not limited to the embodiment, it will be understood by a person skilled in the art that various changes in form and details may be made therein without departing from the spirit and scope of the present disclosure as defined by the following claims and their equivalents.

### Description of symbols

- 10:: secondary battery
- 100:: case
- 110, 210:: front surface
- 120, 220:: upper surface
- 122:: vent
- 200:: electrode assembly
- 230:: left side
- 240:: negative electrode tab
- 250:: finishing tapes
- 300:: first cap assembly
- 310:: negative electrode terminal
- 400:: second cap assembly
- 410:: positive electrode terminal
- 500, 500a, 500b:: retainer
- 510:: degassing hole
- 510a, 500b:: degassing holes

## Claims

1. A secondary battery (10) comprising:
a case (100) having a hexahedral shape with opposite ends in a longitudinal direction being open;
an electrode assembly (200) accommodated in the case (100) and comprising a negative electrode tab (240) at one end thereof in the longitudinal direction and a positive electrode tab at an opposite end thereof in the longitudinal direction;
a pair of cap assemblies respectively electrically connected to the negative electrode tab (240) and the positive electrode tab and respectively coupled to the open opposite ends of the case (100); and
a retainer (500) between the electrode assembly (200) and the case (100) and on a side surface area of the electrode assembly (200) at where the negative electrode tab (240) and the positive electrode tab are not formed.

2. The secondary battery (10) as claimed in claim 1, wherein the case (100) has a vent (122) in a long side surface thereof, and
wherein the retainer (500) is on a side surface of the electrode assembly (200) corresponding to a position of the vent (122).

3. The secondary battery (10) as claimed in claim 1 or 2, wherein the retainer (500) has a degassing hole (510) penetrating therethrough at a position corresponding to the vent (122).

4. The secondary battery (10) as claimed in any one of claims 1 to 3, further comprising a sub-retainer on a side surface of the electrode assembly (200) at where the vent (122) is not formed.

5. The secondary battery (10) as claimed in any one of claims 1 to 4, wherein the retainer (500) and the sub-retainer are sheets and are attached to the electrode assembly (200).

6. The secondary battery (10) as claimed in any one of claims 1 to 5, wherein the retainer (500) and sub-retainer are made of insulating material.

7. The secondary battery (10) as claimed in claim 1 or 2, wherein the retainer (500a) has a plurality of degassing holes (510a) penetrating therethrough at a position corresponding to the vent (122).

8. The secondary battery (10) as claimed in claim 7, further comprising a sub-retainer on a side surface of the electrode assembly (200) at where the vent (122) is not formed.

9. The secondary battery (10) as claimed in claims 7 or 8, wherein the retainer (500a) and the sub-retainer are sheets and are attached to the electrode assembly (200).

10. The secondary battery (10) as claimed in any one of claims 7 to 10, wherein the retainer (500a) and sub-retainer are made of insulating material.

11. The secondary battery (10) as claimed in claim 2, wherein the retainer (500b) has a plurality of degassing holes (510b) penetrating therethrough at an area covering and larger than an area corresponding to the position of the vent (122).

12. The secondary battery (10) as claimed in claim 11, further comprising a sub-retainer (500b) on a side surface of the electrode assembly (200) at where the vent (122) is not formed.

13. The secondary battery (10) as claimed in claims 11 or 12, wherein the retainer (500b) and the sub-retainer are sheets and are attached to the electrode assembly (200).

14. The secondary battery (10) as claimed in any one of claims 11 to 13, wherein the retainer (500b) and sub-retainer are made of insulating material.
